(19) Europäisches Patentamt
European Patent Office
Office européen des brevets

(11) **EP 1 775 725 A1**

(12) **EUROPEAN PATENT APPLICATION**
published in accordance with Art. 158(3) EPC

(43) Date of publication:
**18.04.2007 Bulletin 2007/16**

(51) Int Cl.:
***G11B 20/10*** ***(2006.01)***

(21) Application number: **05751317.8**

(22) Date of filing: **20.06.2005**

(86) International application number:
**PCT/JP2005/011254**

(87) International publication number:
**WO 2006/011318 (02.02.2006 Gazette 2006/05)**

(84) Designated Contracting States:
**DE FR GB**

(30) Priority: **27.07.2004 JP 2004218064**

(71) Applicant: **SONY CORPORATION**
**Tokyo 141-0001 (JP)**

(72) Inventors:
• **YAMADA, Makoto**
**c/o Sony Corp.**
**Shinagawa-ku, Tokyo (JP)**
• **SATO, Takayuki**
**c/o Sony Corp**
**Shinagawa-ku, Tokyo (JP)**
• **OBATA, Hideo**
**c/o Sony Corp**
**Shinagawa-ku, Tokyo (JP)**

• **TADOKORO, Eiji**
**c/o Sony Corp.**
**Shinagawa-ku, Tokyo (JP)**
• **NAGAO, Yoshito**
**c/o Sony Corp.**
**Shinagawa-ku, Tokyo (JP)**
• **SHIMONO, Hiroshi**
**c/o Sony Corp.**
**Shinagawa-ku, Tokyo (JP)**

(74) Representative: **Nicholls, Michael John**
**J.A. KEMP & CO.**
**14, South Square**
**Gray's Inn**
**London WC1R 5JJ (GB)**

(54) **DIGITAL DATA RECORDING DEVICE AND RECORDING METHOD**

(57) To reduce the occurrence of fragmentation when variable-bit-rate digital data is recorded on a continuous area of unit periods. When the amount of data in the buffer memory is larger than that for one unit period, the digital data in the buffer memory is read every unit period, and the read digital data is recorded as a continuous area (step S106). When the amount of data in the buffer memory is less than that for one unit period, the amount of data is estimated from the time corresponding to the amount of data less than that for the unit period and the length of the unit period (step S112). The digital data of the unit period is recorded on a recordable area in which the estimated amount of digital data can be recorded continuously (step S106).

FIG. 2

Flowchart (100):
- START (101)
- IS DBUF LARGER THAN THAT FOR ONE UNIT PERIOD TUNIT? (102)
  - Y → CALCULATE THE SIZE OF DATA #n (103)
  - N → CALCULATE REMAINING DATA AMOUNT DBUF (111) → ESTIMATE THE SIZE OF DATA #n BY Eq.(1) (112)
- SEEK FREE SPACE (104)
- MOVE RECORDING HEAD TO THE FREE SPACE (105)
- RECORD DATA #n ON THE FREE SPACE (106)
- RETURN (107)

EP 1 775 725 A1

**Description**

Technical Field

The present invention relates to an apparatus and a method for recording digital data.

Background Art

The MiniDisc™ for use in recording and reproducing digital audio data organizes the digital data in cluster units, and the cluster is the minimum unit of writing to the disc.

For such a system, there has been proposed a system for recording digital data in such a way that digital data during a unit length of about 10 to 20 seconds is recorded in continuous recording area on the disc.

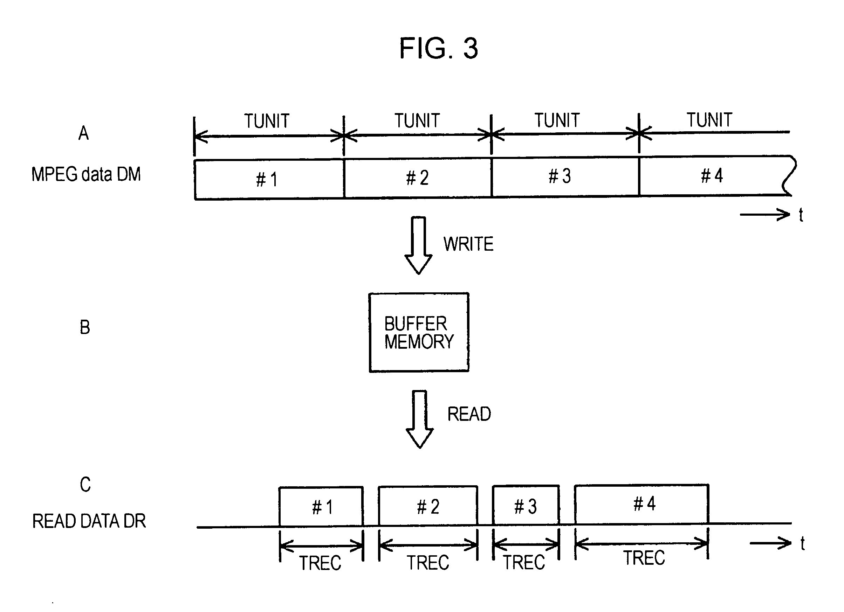

Fig. 3 is a diagram for describing a method for signal processing of the system. The video signal and audio signal are encoded to digital data (program stream) DM in the MPEG2 (Motion Picture Experts Group Phase 2) format, as shown in Fig. 3A. The data DM is sequentially written to the buffer memory, as shown in Fig. 3B, and then sequentially and intermittently read as data DR from the buffer memory, as shown in Fig. 3C.

In this case, the data DR is a signal read at a fixed speed in such a way that the MPEG data DM is separated by unit period TUNIT, and the data in unit period TUNIT is compressed in time base every period TREC. The unit period TUNIT is anywhere between 10 to 20 seconds. Although the length of the unit period TUNIT may be changed in one recording, the unit period TUNIT is generally fixed during at least one recording to avoid the complication of the system and control.

The period TREC is a period during which read data #n is recorded on the disc, the length of which is not fixed, to be described later. The period between one period TREC and the subsequent period TREC is the seeking period of a recording head or the pause period of the recording. The data DM for each period TUNIT or the data DR for each period TREC are expressed as data #n (n = 1, 2, 3 -).

The data DR read from the buffer memory is subjected to modulation for recording, and the modulated data DR is recorded on the disc in order of data #1, #2, # 3 and so on.

Since the MPEG data DM has a variable bit rate and the unit period TUNIT is fixed in length, the amount (size) of data #n contained in the unit period TUNIT depends on the content of the video and audio during the unit period TUNIT. When the MPEG data DM is read as data DR every period TREC and recorded on the disc, the period TREC varies depending no the content of the data DR during the period TREC since the data DR is read from the buffer memory at a fixed bit rate. The recording area for one period TREC depends on the content of data #n during the period TREC.

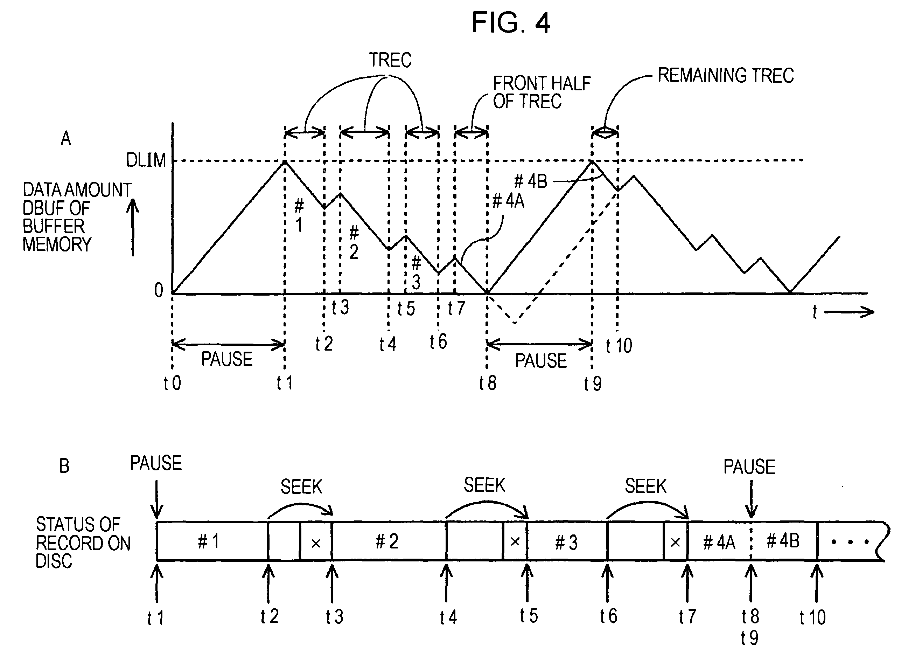

Fig. 4A shows changes in the amount of data (the remaining data) in the buffer memory shown in Fig. 3. Fig. 4B shows the state of recording onto the disc. When the disc has a bad sector or an old recording period fragmented into pieces because of repeated recording or erasing, an area unavailable for recording may be generated. The symbol x in Fig. 4B indicates the unavailable area. The area having no symbol or sign is a recordable area.

Referring to Fig. 4A, when an instruction to start recording is given at time t0, the recording head is moved to the position to start the first recordable area on the disc, and the writing of the MPEG data DM to the buffer memory is started at time t0. Accordingly, the data amount DBUF in the buffer memory gradually increases from time t0. The rate of the increase is not fixed because the data DM has a variable bit rate.

When the data amount DBUF reaches the upper limit DLIM of the buffer memory at time t1, the data DM in the buffer memory is read as data #1 of the data DR from time t1. Therefore the data amount DBUF gradually decreases from time t1. In practice, the writing of the data DM is continued even after time t1.

When data #1 for one unit period TUNIT is read at time t2, the reading is temporarily stopped, therefore the data amount DBUF gradually increases again from time t2.

The period from time t1 to t2 is also a recording period TREC, and the data #1 read from the buffer memory during the period from t1 to t2 is recorded in a continuous area on the disc, as shown in Fig. 4B.

When the reading of data #1 from the buffer memory is finished at time t2, an area necessary for recording subsequent data #2 into the buffer memory is calculated from the amount of data #2, and the recording head seeks a recordable area that satisfies the calculated area during the period of time t2 to t3.

When seek operation by the recording head is completed at time t3, data #2 in the buffer memory is read from time t3 and recorded on the disc, as at time t1. The data amount DBUF is therefore gradually decreased from time t3.

The process similar to that during time t1 through t3 is repeated for the period of time t3 through t5, wherein data #2 is recorded on the disc. The process is repeated also for the period of time t6 to t7, wherein data #3 is recorded on the disc.

At time t7, the reading and recording of data #4 onto the disc are started. In the case of Fig. 4, however, since the amount DBUF of data #4 remaining in the buffer memory at time t7 is less than the data amount for one unit period TUNIT, the data amount DBUF of the buffer memory reaches zero at time t8. Therefore, the reading of data #4 from the buffer memory and recording of data #4 to the disc are temporarily stopped at time t8. Accordingly, only #4A which is a front part of data #4 is recorded. The data amount DBUF in the buffer memory increases again from time t8.

When the data amount DBUF reaches the upper limit DLIM of the buffer memory at time t9, the remaining #4B of data #4 is read from the buffer memory and is recorded in the subsequent area of the disc in which the front part #4A is recorded during the period of time t7 to t8. Accordingly, although the reading of data #4 is divided temporally, as shown in Fig. 4A, the area in which data #4 is recorded is continuous, as shown in Fig. 4B.

When the reading and recording of the remaining data #4B of data #4 on the disc are completed at time t10, the process from time t2 on is repeated thereafter. Accordingly, data DR, or MPEG data DM is recorded on the disc as one continuous area every unit period TUNIT.

That is the reading and recording of data DR for the buffer memory and writing to the disc. Thus, the foregoing system performs recording by the unit period TUNIT of about 10 to 20 seconds in such a way that MPEG data in the unit period TUNIT continues on the disc.

The system allows the period TREC for recording data in the disc to be intermittent, so that the drive of the disc can be stopped during the period from t0 to t1 and t8 to t9. This reduces average power consumption necessary for driving the disc, thus shooting and recording times of recording devices that use battery cells as power source, such as a camcorder, increase.

Moreover, in this system, since the unit period TUNIT is fixed in length and the area on the disc for one unit period TUNIT is continuous, the seek operation by a reproduction head can be reliably performed during reproduction (and recording). This allows video signals or audio signals to be continuously obtained even at the bound between the unit periods TUNIT, allowing seamless video or sound reproduction even at the bound.

An example of the related arts is Japanese Unexamined Patent Application Publication No. 5-54518.

For example, at time t1, the MPEG data DM of one unit period TUNIT or more is stored in the buffer memory. Accordingly, it is desirable to find the amount of data #1 and calculate an area necessary for recording data #1, and then to make the recording head seek operation to a recordable area that satisfies the calculated area. This also applies to time t4, t6, and t10.

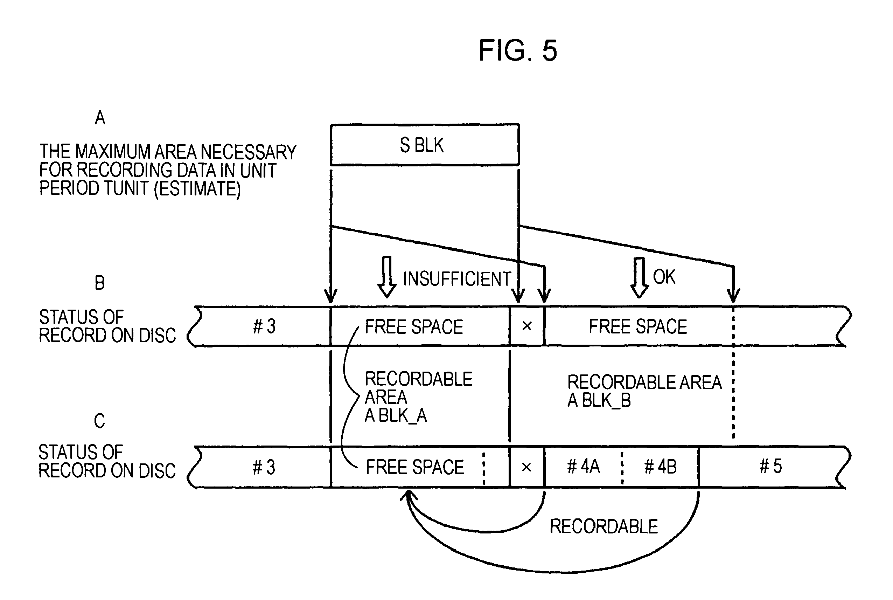

However, for time t6, since data #4 in the buffer memory is less than that for one unit period TUNIT, the total amount of data #4 cannot be known. Therefore, the process shown in Fig. 5 is performed to record data #4. That is, the maximum amount of data for one unit period TUNIT is first assumed, and the area SBLK of the recordable area for recording the maximum amount of data is calculated.

In the case of Fig. 5B, the recordable area ABLK_A following the recorded region of data #3 is smaller in size than the necessary recordable area SBLK. Accordingly, the recording head is moved to a recordable area ABLK_B larger than the necessary recordable area SBLK. As shown in Fig. 5C, Data #4A is recorded on the recordable area ABLK_B, and then date #4B is recorded, and data from data #5 on is recorded in sequence.

Accordingly, as shown in Fig. 5C, even if the actual area necessary for recording data #4 is smaller than the recordable area ABLK_A, the recordable area ABLK_A is not used for recording the data #4.

As a result, when the state in which the data amount DBUF of the buffer memory is less than that for one unit period TUNIT, as at time t6, is repeated, an area unavailable for recording increases, thus decreasing an actually available area on the disc. Moreover, since the MPEG data DR is written excessively dividedly, the number of times of seek operation during recording is increased. As a result, the number of times of seek operation during reproduction increases.

Furthermore, even if the recordable area ABLK_A can be used in another recording, useless seek operation occurs during the recording, resulting in an increase in power consumption, and inevitably causing useless seek operation also during reproduction, resulting in an increase in power consumption during reproduction.

Accordingly, in the case of Fig. 4A, it is also possible not to start the reading and recording of data #4 (front part #4A) even at time t7 but to continue the writing of the remaining part #4B of data #4 into the buffer memory, and after the data amount DBUF of the buffer memory has reached the upper limit DLIM, to start the reading of data #4 from the buffer memory and recording to the disc, as at time t1. This method allows the size of the necessary area to be determined from the amount of actually recorded data #n, allowing effective use of the recordable area.

However, with this method, the data amount DBUF of the buffer memory at time t6 sometimes becomes substantially equal to the maximum data amount for one unit period TUNIT. Accordingly, when the MPEG data has a high data rate, the data amount DBUF varies in the range from nearly the maximum data amount for one unit period TUNIT to the upper limit DLIM, so that the apparent capacity of the buffer memory becomes low.

Disclosure of Invention

The present invention is made to solve the above-described problems.

The invention provides a digital-data recording apparatus, comprising:

a buffer memory into which variable-bit-rate digital data is written and from which the written digital data is intermittently read;
a recording head for recording the digital data read from the buffer memory on a disc; and
a control circuit for controlling the position at which the digital data read from the buffer memory is recorded on the disc, wherein
when the amount of the digital data in the buffer memory is larger than that for one unit period,
the control circuit
reads the digital data in the buffer memory every unit period;
makes the recording head seek a recordable area in which the read digital data can be recorded as a continuous area; and
records the read digital data onto the recordable area as a continuous area of the unit periods, and
when the amount of the digital data in the buffer memory is less than that for one unit period,
the control circuit
estimates the amount of the digital data in one unit period including the digital data less than that for the unit period from the time corresponding to the amount of the digital data less than that for the unit period and the length of the unit period;
makes the recording head seek a recordable area in which the estimated amount of digital data can be continuously recorded;
records the digital data of an amount less than that for the unit period onto the sought recordable area; and
records the remaining digital data for the unit period including the digital data less than that for the unit period, following the recorded part.

The invention provides a method for recording digital data, wherein
in the case where variable-bit-rate digital data is written into a buffer memory and the written digital data is intermittently read at a constant speed, and
the digital data read from the buffer memory is supplied to the recording head and recorded on a disc,
when the amount of the digital data in the buffer memory is larger than that for one unit period,
the method comprises:

reading the digital data in the buffer memory every unit period;
making the recording head seek a recordable area on which the read digital data can be recorded as a continuous area; and
recording the read digital data on the sought recordable area as a continuous area of the unit periods; and
when the amount of the digital data in the buffer memory is less than that for one unit period,
the method comprises:

estimating the amount DPRE of the digital data in one unit period including the digital data less than that for the unit period by the equation

$$DPRE = DBUF + (TUNIT - TBUF) \times BMAX$$

where, DPRE: estimated data amount

DBUF: the amount of data left in the buffer memory
TUNIT: the length of one unit period
TBUF: playback time for the data left in the buffer memory
BMAX: the maximum bit rate of digital data,

making the recording head seek a recordable area on which the estimated amount DPRE of digital data can be continuously recorded;
recording the digital data of an amount less than that for the unit period on the sought recordable area; and
recording the remaining digital data for the unit period including the digital data less than that for the unit period, following the recorded part.

When the amount of digital data in the buffer memory is less than that for unit period, such as data #4, the amount of data for the unit period is estimated in consideration of the time corresponding to the amount of data, and the recording head is made seek a necessary recordable area according to the estimation. This allows making a good use of the disc.

Since the arrangement of the invention makes a efficient use of the recordable area, the number of times of seek operation is decreased, resulting in a decrease in the number of times of seek operation during reproduction, thus increasing the recording time and the reproduction time for devices using battery cells as power source. Furthermore, this arrangement allows the whole capacity of the buffer memory to be used effectively.

Brief Description of the Drawings

Fig. 1 is a system diagram of an embodiment of the invention;
Fig. 2 is a flowchart of an embodiment of the invention;
Fig. 3 is a diagram for describing the invention;
Fig. 4 is a diagram for describing the invention; and
Fig. 5 is a diagram for describing the invention.

Best Mode for Carrying Out the Invention

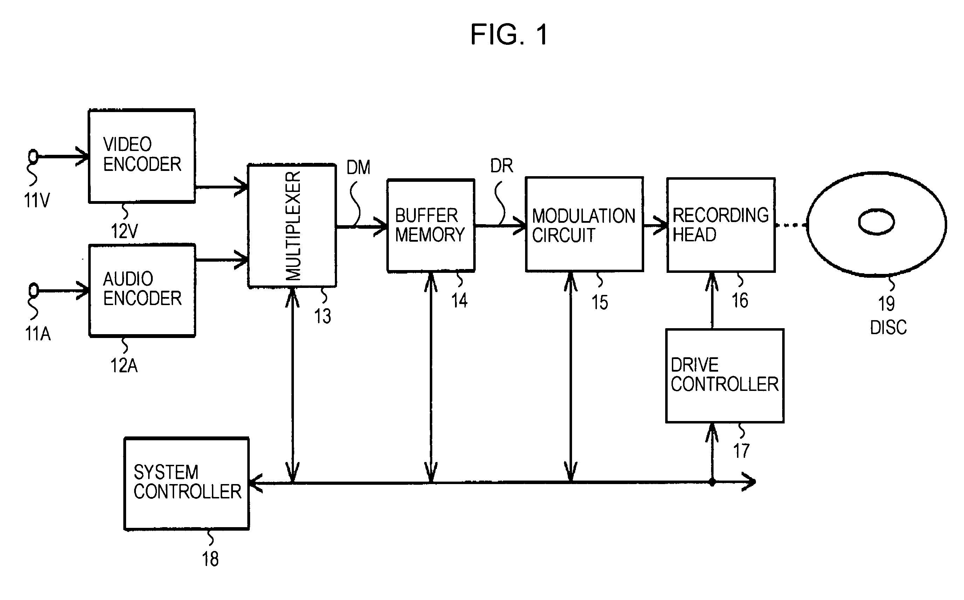

Fig. 1 shows an example of the recording apparatus according to the invention. A digital video signal and a digital audio signal are supplied to a video encoder 12V and an audio encoder 12A via input terminals 11V and 11A, respectively, where they are encoded to digital data (elementary stream), for example, in MPEG-2 format. The encoded output is supplied to a multiplexer 13, where they are multiplexed to an MPEG-2 format digital data (program stream) DM, from which MPEG data DM is extracted in sequence, as shown in Fig. 3A.

The MPEG data DM is written to a buffer memory 14 in sequence, as also shown in Fig. 4A, and read out as data DR in sequence. The read data DR is supplied to a modulation circuit 15, where it is modulated for recording into a recording signal. The recording signal is supplied to a recording head 16, where it is recorded onto a disc 19, for example, as shown in Fig. 4B.

To achieve the foregoing process, a drive controller 17 and a system controller 18 composed of a microcomputer are provided. The system controller 18 controls the recording position of the recording head 16 for the disc 19 through the used of the drive controller 17. In this example, the system controller 18 also has a function of memory controller, so that it controls the writing of the data DM and the reading of the data DR for the buffer memory 14.

The system controller 18 also controls the multiplexer 13 and the modulation circuit 15 for the data DM and DR. The system controller 18 grasps and manages the recordable area and the unavailable area of the disc 19. When the control information changes, it is recorded on the disc 19.

Thus the digital video signal and the digital audio signal are recorded on the disc 19.

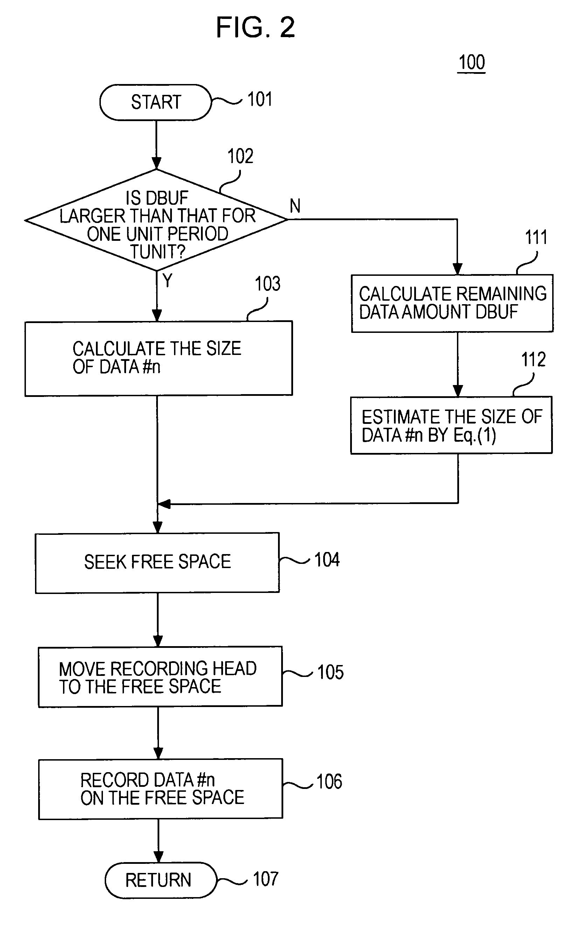

The system controller 18 has, for example, a recording routine 100, as shown in Fig. 2, as a part of the program executed by the microcomputer thereof. The recording routine 100 is executed for each recording of data #n, wherein even if the data amount DBUF of the buffer memory 14 is less than that of one unit period TUNIT, seek operation to an appropriate recordable area is done.

More specifically, at the completion of the previous recording period TREC, as time t2, t4, t6, and t10, the process of the microcomputer of the system controller 18 is started from step S101 of the routine 100. In step S102, it is determined whether the data amount DBUF of the buffer memory 14 is equal to or more than that for one unit period TUNIT.

When the data amount DBUF of the buffer memory 14 is equal to or more than that for one unit period TUNIT, as time t2 and t4 the process proceeds from step S102 to step S103, where the amount of data #n for the first unit period TUNIT in the data DM of the buffer memory 14 is calculated.

Subsequently, in step S104, a recordable area in which the data #n of the amount calculated in step S103 is sought on the basis of the management information on the disc 19 which is controlled by the system controller 18. In step S105, the recording head 16 is moved to the recordable area sought in step S104.

In step S106, the data #n calculated in step S103 is recorded in a continuous area on the recordable area sought in step S105, and then the routine 100 is finished in step S107. The finish time is time t2, t4 and so on.

Data #1, #2, #3 are thus recorded on the disc 19 to form a continuous area.

On the other hand, when the data amount DBUF of the buffer memory 14 is less than that for one unit period TUNIT, as at time t6, the process proceeds from step S102 to step S111, where the amount DBUF of the data DM left in the buffer memory 14 is calculated.

Next, in step S112, for the case of Fig. 4, the amount of data #4 is estimated by Eq. (1). That is, the data amount DPRE of one unit period TUNIT to which the data #n left in the buffer memory 14 belongs is estimated by Eq. (1).

$$DPRE = DBUF + (TUNIT - TBUF) \times BMAX \qquad (1)$$

where, DPRE: estimated data amount

DBUF: the amount of data left in the buffer memory 14
TUNIT: the length of one unit period (anywhere between 10 to 20 seconds)
TBUF: reproduction time for data left in the buffer memory 14
BMAX: the maximum bit rate of digital data DM.

In this case, the data amount DBUF can be calculated from the difference between the writing address and the reading address for the buffer memory 14. The reproduction time TBUF can be obtained from the data stream stored in the buffer memory 14; for example, it can be obtained by detecting the header of the picture in the stream and counting the number of the frames. The one unit period TUNIT and the maximum bit rate BMAX are given to the system controller 18 in advance.

The process proceeds from step S112 to step S104, where a recordable area on which the data of the amount DBUF estimated in step S112 can be continuously recorded is sought. In step S105, the recording head 16 is moved to the recordable area sought in step S104.

Subsequently, in step S106, the data left in the buffer memory 14, in this case, the front part 4A of data #4 is recorded on the recordable area sought in step S105, and then the remaining part #4B is continuously recorded as one area, and the routine 100 is finished in step S107.

Thus, for example, data #4 is recorded as one continuous area on the disc 19.

Since the routine 100 is executed for each data #n, the data DR, or the MPEG data DM, is recorded on the disc 19, as shown in Fig. 4. At the recording, area control information recorded on the disc 19 is updated with the process of the routine 100 by the system controller 18.

The recording apparatus can record the MPEG data DM on the disc 19 in this way. The reproduction can be achieved by the process complementary to the recording process. Specifically, the recording signal is intermittently reproduced from the disc 19 in the order of data #n according to the control information recorded on the disc 19; the data DR is demodulated from the reproduced recording signal and written into the buffer memory, and the written data DR is continuously read as MPEG data DM.

Thus the recording apparatus can record the MPEG data DM on the disc 19. In that case, particularly, the recording apparatus estimates the data amount DBUF by Eq. (1) when the data, such as date #4, in the buffer memory 14 is less than that for one unit period TUNIT at the recording start time t6. The disc 19 can therefore be used effectively.

In the method shown in Fig. 5, the maximum data amount for one unit period TUNIT is estimated for data #4. In contrast, in the case of Eq. (1), the maximum data amount is estimated only for the unknown data part #4B of the data #4. Accordingly, the estimated data amount DBUF for the data #4 is smaller than that by the method shown in Fig. 5.

Accordingly, since the estimated area size necessary for recording data #4 is also equal to or smaller than that by the method of Fig. 5, the probability that the data #4 will be recorded, for example, on the recordable area ABLK_A in Fig. 5B becomes high. That is, the probability that data DR for one unit period TUNIT is recorded on a recordable area that is not used by the method of Fig. 5 becomes high. As a result, data can be recorded even on a short recordable area effectively, so that the disc 19 can be used effectively.

Moreover, since the recordable area ABLK_A is used effectively from the beginning, the number of times of seeking at the recording is decreased, as a result, the number of times of seek operation during the reproduction is also decreased, and for devices using battery cells as power source, recording time and reproduction time can be increased.

Furthermore, since the data amount DBUF of the buffer memory 14 varies from the minimum value 0 to the upper limit DLIM, the whole capacity of the buffer memory 14 can be used effectively. Moreover, even if all the data DM of one unit period TUNIT cannot be written in the buffer memory 14 because the data DR has a high bit rate or the buffer memory 14 has a small capacity, the whole capacity of the buffer memory 14 can be effectively used.

The disc 19 may be an optical disc such as a DVD recordable (DVD-R) or a blu-ray disc or a magnetooptical disc (MO). The invention may be applied to recording of data with a variable bit rate on a disc by unit period irrespective of the content of data, format of the signal, the kind of the disc, and the method of managing the data on the disc.

**Claims**

1.  A digital-data recording apparatus, comprising:

a buffer memory into which variable-bit-rate digital data is written and from which the written digital data is intermittently read;

a recording head for recording the digital data read from the buffer memory on a disc; and

a control circuit for controlling the position at which the digital data read from the buffer memory is recorded on the disc, wherein

when the amount of the digital data in the buffer memory is equal to or more than that for one unit period, the control circuit

reads the digital data in the buffer memory every unit period;

makes the recording head seek a recordable area in which the read digital data can be recorded as a continuous area; and

records the read digital data onto the recordable area as a continuous area of the unit periods, and

when the amount of the digital data in the buffer memory is less than that for one unit period, the control circuit

estimates the amount of the digital data in one unit period including the digital data less than that for the unit period from the time corresponding to the amount of the digital data less than that for the unit period and the length of the unit period;

makes the recording head seek a recordable area in which the estimated amount of digital data can be continuously recorded;

records the digital data of an amount less than that for the unit period onto the sought recordable area; and

records the remaining digital data for the unit period including the digital data less than that for the unit period, following the recorded part.

2. A digital-data recording apparatus, comprising:

a buffer memory into which various-bit-rate digital data is written and from which the written digital data is intermittently read;

a recording head for recording the digital data read from the buffer memory on a disc; and

a control circuit for controlling the position at which the digital data read from the buffer memory is recorded on the disc, wherein

when the amount of the digital data in the buffer memory is equal to or more than that for one unit period, the control circuit

reads the digital data in the buffer memory every unit period;

makes the recording head seek a recordable area on which the read digital data can be recorded as a continuous area; and

records the read digital data on the sought recordable area as a continuous area of the unit periods, and

when the amount of the digital data in the buffer memory is less than that for one unit period, the control circuit

estimates the amount DPRE of the digital data in one unit period including the digital data less than that for the unit period by the equation

$$DPRE = DBUF + (TUNIT - TBUF) \times BMAX$$

where, DPRE: estimated data amount

DBUF: the amount of data left in the buffer memory
TUNIT: the length of one unit period
TBUF: playback time for the data left in the buffer memory
BMAX: the maximum bit rate of digital data,
makes the recording head seek a recordable area on which the estimated amount DPRE of digital data can be continuously recorded;
records the digital data of an amount less than that for the unit period on the sought recordable area; and
records the remaining digital data for the unit period including the digital data less than that for the unit period, following the recorded part.

3. A method for recording digital data, wherein
in the case where variable-bit-rate digital data is written into a buffer memory and the written digital data is intermittently read, and
the digital data read from the buffer memory is supplied to the recording head and recorded on a disc,
when the amount of the digital data in the buffer memory is equal to or more than that for one unit period,
the method comprises:

reading the digital data in the buffer memory every unit period;
making the recording head seek a recordable area on which the read digital data can be recorded as a continuous area; and
recording the read digital data on the sought recordable area as a continuous area of the unit periods; and
when the amount of the digital data in the buffer memory is less than that for one unit period,

the method comprises:

estimating the amount of the digital data in one unit period including the digital data less than that for the unit period from the time corresponding to the amount of the digital data less than that for the unit period and the length of the unit period;
making the recording head seek a recordable area on which the estimated amount of digital data can be continuously recorded;
recording the digital data of an amount less than that for the unit period on the sought recordable area; and
recording the remaining digital data for the unit period including the digital data less than that for the unit period, following the recorded part.

4.  A method for recording digital data, wherein
in the case where variable-bit-rate digital data is written into a buffer memory and the written digital data is intermittently read at a constant speed, and
the digital data read from the buffer memory is supplied to the recording head and recorded on a disc,
when the amount of the digital data in the buffer memory is equal to or more than that for one unit period,
the method comprises:

reading the digital data in the buffer memory every unit period;
making the recording head seek a recordable area on which the read digital data can be recorded as a continuous area; and
recording the read digital data on the sought recordable area as a continuous area of the unit periods; and
when the amount of the digital data in the buffer memory is less than that for one unit period,

the method comprises:

estimating the amount DPRE of the digital data in one unit period including the digital data less than that for the unit period by the equation

$$DPRE = DBUF + (TUNIT - TBUF) \times BMAX$$

where, DPRE: estimated data amount

DBUF: the amount of data left in the buffer memory
TUNIT: the length of one unit period
TBUF: playback time for the data left in the buffer memory
BMAX: the maximum bit rate of digital data,

making the recording head seek a recordable area on which the estimated amount DPRE of digital data can be continuously recorded;
recording the digital data of an amount less than that for the unit period on the sought recordable area; and
recording the remaining digital data for the unit period including the digital data less than that for the unit period, following the recorded part.

# FIG. 1

EP 1 775 725 A1

# FIG. 2

100

START — 101

IS DBUF LARGER THAN THAT FOR ONE UNIT PERIOD TUNIT? — 102

N →

Y

CALCULATE THE SIZE OF DATA #n — 103

CALCULATE REMAINING DATA AMOUNT DBUF — 111

ESTIMATE THE SIZE OF DATA #n BY Eq.(1) — 112

SEEK FREE SPACE — 104

MOVE RECORDING HEAD TO THE FREE SPACE — 105

RECORD DATA #n ON THE FREE SPACE — 106

RETURN — 107

# FIG. 3

A

MPEG data DM

B

C

READ DATA DR

# FIG. 4

# FIG. 5

A

THE MAXIMUM AREA NECESSARY
FOR RECORDING DATA IN UNIT
PERIOD TUNIT (ESTIMATE)

| S BLK |
|-------|

B

⇩ INSUFFICIENT    ⇩ OK

STATUS OF
RECORD ON DISC

| # 3 | FREE SPACE | × | FREE SPACE |
|-----|------------|---|------------|

RECORDABLE
AREA
A BLK_A

RECORDABLE AREA
A BLK_B

C

STATUS OF
RECORD ON DISC

| # 3 | FREE SPACE | × | # 4A | # 4B | # 5 |
|-----|------------|---|------|------|-----|

RECORDABLE

EP 1 775 725 A1

<table>
<tr><td colspan="2" align="center">**INTERNATIONAL SEARCH REPORT**</td><td>International application No.</td></tr>
<tr><td colspan="2"></td><td>PCT/JP2005/011254</td></tr>
</table>

| | |
|---|---|
| A. CLASSIFICATION OF SUBJECT MATTER<br>Int.Cl⁷ G11B20/10 | |

According to International Patent Classification (IPC) or to both national classification and IPC

B. FIELDS SEARCHED

Minimum documentation searched (classification system followed by classification symbols)
Int.Cl⁷ G11B20/10, G11B27/00, H04N5/92, G06G3/06

Documentation searched other than minimum documentation to the extent that such documents are included in the fields searched
Jitsuyo Shinan Koho      1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-199789 A (Sharp Corp.),<br>15 July, 2004 (15.07.04),<br>Claim 1<br>& WO 2004/055812 A1 | 1-4 |
| Y | JP 2001-043631 A (Sharp Corp.),<br>16 February, 2001 (16.02.01),<br>Par. No. [0044]<br>(Family: none) | 1-4 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 September, 2005 (13.09.05) | Date of mailing of the international search report<br>27 September, 2005 (27.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5054518 A